# DEMANDE DE BREVET EUROPEEN

(11) **EP 0 843 496 A1**
(43) Date de publication de la demande: **20.05.1998**
(21) Numéro de dépôt: 97402706.2
(22) Date de dépôt: 13.11.1997
(51) Int. Cl.: H04Q 7/32

(54) **Module d'indentification d'abonné pour terminal mobile de télécommunication, et terminal mobile de télécommunications**

(30) Priorité: 19.11.1996 FR 9614061
(71) Demandeur: ALCATEL ALSTHOM COMPAGNIE GENERALE D'ELECTRICITE, 75008 Paris (FR)
(72) Inventeur: Crozat, Marielle, 78150 LE Chesnay (FR)
(74) Mandataire: El Manouni, Josiane

(57) **Abrégé**

Ce module d'identification d'abonné pour terminal mobile de télécommunications , comportant des moyens (7) de stockage de données dites de base liées à des facilités offertes à l'utilisateur pour l'accès à des services de télécommunications, dans une zone de mémoire (23, 24, 25) prédéfinie afin d'assurer une compatibilité de ce module avec les différents types de terminaux mobiles aptes à recevoir un tel module, est essentiellement caractérisé en ce qu'il comporte en outre des moyens de stockage de données complémentaires associées, liées à des facilités complémentaires, dans une autre zone de mémoire (26, 27, 28), prédéfinie afin de n'assurer une compatibilité de ce module qu'avec certains terminaux seulement.

## Description

La présente invention concerne d'une manière générale les terminaux mobiles de télécommunications, et plus particulièrement les facilités offertes par ces terminaux pour l'accès à des services de télécommunications.

A titre d'exemple de telles facilités on peut citer: la possibilité de stockage de données de type répertoires téléphoniques, permettant de faciliter l'accès aussi bien à des services dits de base, qu'à des services dits à valeur ajoutée opérateur (tels que notamment des services interactifs), ou encore d'effectuer des opérations sur des services dits supplémentaires (tels que par exemple le renvoi d'appels, l'interdiction d'appels sortants,...etc.), ou encore, dans le cas de réseaux de télécommunications mobiles offrant, outre un service de téléphonie, un service de transmission de messages alphanumériques courts, la possibilité de stockage de messages alphanumériques courts à émettre, ou reçus, par ces terminaux.

Il est connu de stocker des données ainsi liées à de telles facilités dans le terminal lui-même, ou, pour plus de souplesse, dans un élément appelé module d'identification d'abonné, qui revêt en pratique la forme d'une carte à puce destinée à être introduite dans ce terminal pour en permettre l'utilisation, cette carte étant appelée aussi carte "SIM" (pour "Subscriber Identity Module") dans le système de télécommunications mobiles connu sous le nom de GSM (pour "Global System for Mobile communications").

Comme prévu par la recommendation GSM 11.11, les données ainsi liées à de telles facilités sont, comme les données liées à l'identification d'abonné, stockées dans des zones de mémoire prédéfinies de cette carte, de manière à assurer une compatibilité de cette carte avec les divers types de terminaux GSM susceptibles de la recevoir. Il est ainsi possible de bénéficier desdites facilités à partir de n'importe quel terminal susceptible de recevoir une telle carte.

La présente invention a notamment pour but d'accroître la qualité de service ainsi liée auxdites facilités, mais de ne permettre au contraire de bénéficier d'une telle qualité de service accrue qu'à partir de certains terminaux seulement, ainsi reconnaissables par la qualité de service qu'ils procurent.

Un objet de la présente invention consiste ainsi dans un module d'identification d'abonné pour terminal mobile de télécommunications, ce module comportant des moyens de stockage de données dites de base liées à des facilités offertes à l'utilisateur pour l'accès à des services de télécommunications, dans une zone de mémoire prédéfinie afin d'assurer une compatibilité de ce module avec les différents types de terminaux mobiles aptes à recevoir un tel module, et ce module étant essentiellement caractérisé en ce qu'il comporte en outre des moyens de stockage de données complémentaires associées, liées à des facilités complémentaires, dans une autre zone de mémoire, prédéfinie afin de n'assurer une compatibilité de ce module qu'avec certains de ces terminaux seulement.

La présente invention a également pour objet un terminal mobile de télécommunications destiné à être muni d'un tel module, ce terminal comportant des moyens de lecture de données de base stockées dans un tel module, et d'exploitation de données de base ainsi lues, et ce terminal étant essentiellement caractérisé en ce qu'il comporte en outre des moyens permettant, en cas de lecture de données de base, de commander une lecture subséquente de données complémentaires associées, et d'exploiter des données complémentaires ainsi lues.

Un autre objet de la présente consiste ainsi dans un terminal mobile de télécommunications destiné à coopérer avec un module d'identification d'abonné comportant lui-même des moyens de stockage de données dites de base liées à des facilités offertes à l'utilisateur pour l'accès à des services de télécommunications, ce terminal comportant des moyens de lecture de données de base stockées dans un tel module, et d'exploitation de données de base ainsi lues, et étant essentiellement caractérisé en ce qu'il comporte en outre des moyens de stockage de données complémentaires associées, liées à des facilités complémentaires, et des moyens permettant, en cas de lecture, dans ledit module d'identification d'abonné, de données de base, de commander une lecture subséquente, dans ce terminal, de données complémentaires associées, et d'exploiter des données complémentaires ainsi lues.

D'autres objets et caractéristiques de la présente invention apparaîtront à la lecture de la description suivante d'un exemple de réalisation, correspondant à titre d'exemple au cas où lesdites données complémentaires sont stockées dans le module d'identification d'abonné, cette description étant faite en relation avec les dessins ci-annexés dans lesquels:
- la figure 1 est un schéma synoptique rappelant la structure d'un terminal mobile de télécommunications et d'un module d'identification d'abonné,
- la figure 2 est un schéma destiné à illustrer l'organisation des données dans la mémoire d'un module d'identification d'abonné suivant l'invention,
- la figure 3 est un diagramme destiné à illustrer les échanges d'informations sur l'interface entre un terminal suivant l'invention et un module d'identification d'abonné suivant l'invention.

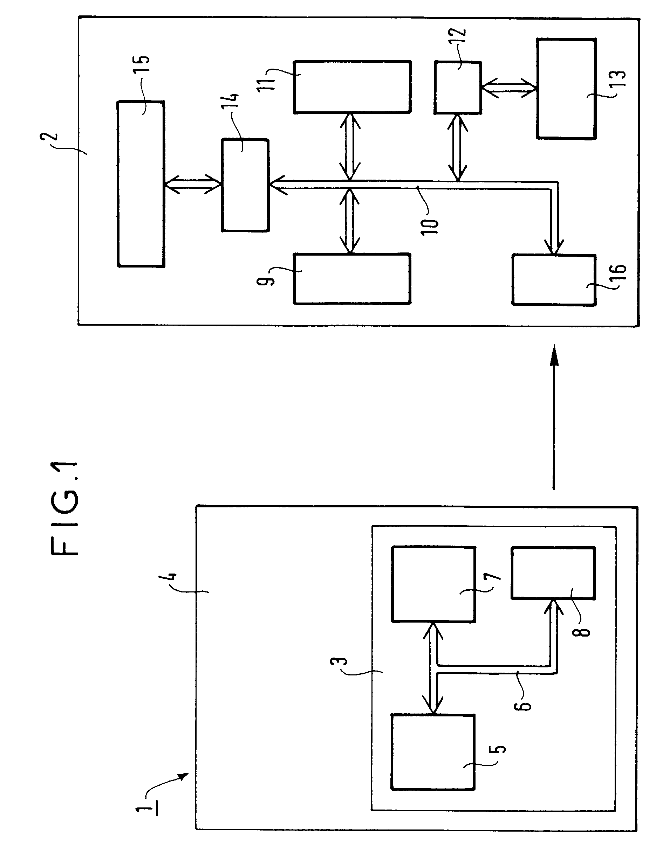

Sur la figure 1 sont illustrés un module d'identification d'abonné 1 et un terminal mobile de télécommunications 2.

Le module d'identification d'abonné 1, constitué notamment d'une puce semi-conductrice 3 portée par un support 4 tel que par exemple une carte dite carte SIM, comporte essentiellement des moyens de traitement de données 5 (notamment un microprocesseur), en relation, par un bus 6, avec des moyens de stockage de données 7 et avec des moyens 8 d'interface avec le terminal 2, ces moyens d'interface 8 comportant notamment des moyens de connexion constitués par un ensemble de plages métalliques prévues sur ladite puce et destinées à venir au contact d'un connecteur complémentaire équipant un lecteur de carte SIM prévu sur le terminal 2.

Le terminal 2 comporte essentiellement des moyens de traitement de données 9 (notamment un microprocesseur), en relation, par un bus 10, avec des moyens de stockage de données 11, ainsi qu'avec des moyens 12 d'interface avec un clavier 13, avec des moyens 14 d'interface avec un afficheur 15, et avec des moyens 16 d'interface avec le module d'identification d'abonné 2, ces moyens d'interface 16 comportant notamment un lecteur de carte SIM.

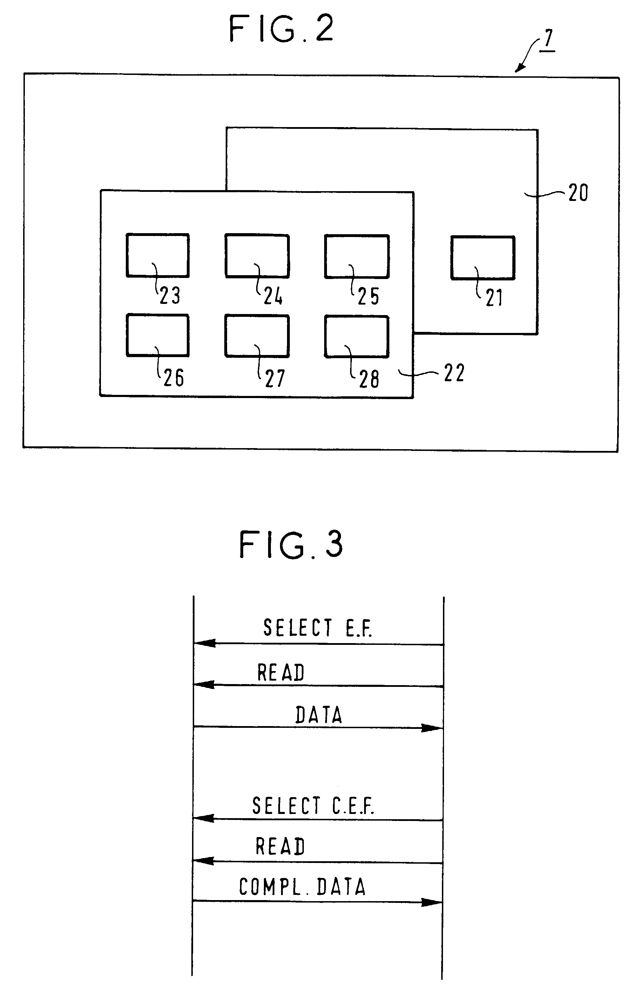

La figure 2 illustre l'organisation des données dans les moyens de stockage de données 7 du module d'identification d'abonné.

Comme décrit dans la recommendation GSM 11.11, les données stockées dans ces moyens de stockage sont rangées dans des entités appelés fichiers élémentaires de données.

Les fichiers élémentaires de données sont regroupés en entités appelées fichiers dédiés; il existe ainsi un fichier dédié dit fichier dédié GSM, noté 20 sur la figure 2, dont les fichiers élémentaires tels que 21 contiennent des données liées à l'identification d'abonné, et un fichier dédié dit fichier dédié Télécom, noté 22, dont les fichiers élémentaires contiennent des données liées auxdites facilités offertes à l'utilisateur pour l'accès à des services de télécommunications.

Il existe ainsi notamment, dans le fichier dédié Telecom:
- un fichier élémentaire, noté 23, appelé aussi EF-ADN (pour: "Elementary File-Abbreviated Dialling Numbers") àestiné à contenir un répertoire comportant des données dites ici de base telles que des numéros de téléphone, ou des chaînes de contrôle de services supplémentaires, et des noms d'abonnés ou des identifiants correspondant à ces numéros de téléphone ou à ces chaînes, notamment en vue d'une numérotation abrégée, ou d'opérations sur les services supplémentaires,
- un fichier élémentaire, noté 24, appelé aussi EF-SMS (pour: "Elementary File-Short Message Service"), destiné, pour le cas de services de télécommunications constitués par des services de transmission de messages alphanumériques courts, à contenir des données dites ici de base correspondant à des messages courts reçus par le terminal, ou à émettre par le terminal,
- un fichier élémentaire, noté 25, appelé aussi EF-SDN (pour: "Elementary File-Service Dialling Numbers"), destiné, pour le cas de services de télécommunications constitués par des services dits à valeur ajoutée opérateur, à contenir des données dites ici de base telles que des numéros de téléphone, ou des chaînes de contrôle de services supplémentaires, et des noms de services à valeur ajoutée opérateur correspondant à ces numéros de téléphone ou à ces chaînes, notamment en vue d'une numérotation abrégée, ou d'opérations sur les services supplémentaires.

Chacun de ces fichiers est identifié par la zone de mémoire qu'il occupe dans lesdits moyens de stockage, cette zone de mémoire étant prédéfinie de manière à assurer une compatibilité entre cette carte et les différents types de terminaux susceptibles de la recevoir.

Chaque fichier élémentaire de données est défini par ses caractéristiques, notamment les conditions d'accès à ce fichier élémentaire, et par les données elles-mêmes.

Suivant l'invention, ces moyens de stockage de données sont également utilisés pour stocker des données complémentaires associées à de telles données de base, ces données complémentaires étant liées à des facilités dites complémentaires, et étant stockées dans une autre zone de mémoire, prédéfinie de manière à n'assurer une compatibilité de cette carte qu'avec certains terminaux seulement, ainsi associés à une certaine qualité de service.

Des fichiers élémentaires complémentaires peuvent ainsi être créés pour de telles données complémentaires. A titre d'exemple, peuvent ainsi être crées, par exemple dans le fichier dédié Telecom, notamment:
- un fichier élémentaire complémentaire, noté 26, appelé ici CEF-ADN (pour: "Complementary Elementary File-Abbreviated Dialling Numbers") destiné à contenir des données complémentaires associées à des données de base constituées ici par des données de répertoire stockées dans le fichier élémentaire EF-ADN, ces données complémentaires permettant de faciliter encore l'accès à des services de base, ou les opérations effectuées sur des services supplémentaires, et comportant par exemple des données dites d'information complémentaire, telles que par exemple des adresses et/ou des commentaires associés aux différents numéros de telephone ou chaînes de contrôle de services supplémentaires de ce répertoire, pour information de l'utilisateur, notamment avant sélection d'un de ces numéros ou d'une de ces chaînes, et/ou des données dites d'identification permettant une identification aisée d'un tel numéro ou d'une telle chaaîne, notamment par un symbole graphique associé à ce numéro ou à cette chaîne,
- un fichier élémentaire complémentaire, noté 27, appelé aussi CEF-SMS (pour: "Complementary Elementary File-Short Message Service"), destiné à contenir des données complémentaires associées à des données de base constituées ici par des messages alphanumériques courts stockés dans le fichier élémentaire EF-SMS, ces données complémentaires permettant de faciliter encore l'accès à des services de transmission de messages alphanumériques courts, et comportant par exemple des messages alphanumériques courts complémentaires (tels que par exemple diverses fins de messages possibles pouvant être associées à divers débuts de messages stockés dans le fichier EF-SMS, comme par exemple divers lieux ou heures possibles de rendez-vous pour un début de message du type "Rendez-vous à ..."), et/ou des données dites d'identification permettant une identification aisée d'un tel message, notamment par un symbole graphique associé à ce message,
- un fichier élémentaire complémentaire, noté 28, appelé aussi CEF-SDN (pour: "Complementary Elementary File-Service Dialling Numbers"), destiné à contenir des données complémentaires associées à des données de base constituées ici par des données de répertoire stockées dans le fichier élémentaire EF-SDN, ces données complémentaires permettant de faciliter encore l'accès à des services dits à valeur ajoutée opérateur, et comportant par exemple des données dites d'information complémentaire sur ces services, pour information de l'utilisateur sur le contenu de ces services, notamment avant sélection de l'un d'entre eux, et/ou des données dites d'identification permettant une identification aisée d'un tel service, notamment par un symbole graphique associé à ce service, et/ou des messages de guidage de l'utilisateur en cours d'utilisation d'un tel service, notamment dans le cas de service interactif.

La figure 3 illustre les échanges d'informations sur l'interface entre un terminal suivant l'invention et un module d'identification d'abonné suivant l'invention.

Conformément à la recommendation GSM 11.11,la lecture de données stockées dans un enregistrement donné d'un fichier élémentaire donné du module d'identification d'abonné implique l'envoi, par ce terminal, sur l'interface entre ce module et ce terminal, d'une instruction de sélection de fichier élémentaire, notée "SELECT EF" (pour: "Select Elementary File"), puis d'une instruction de lecture à l'intérieur de ce fichier élémentaire, notée "READ", puis l'envoi, par ce module, sur cette interface, des données, notées "DATA", correspondant au résultat de la lecture.

Suivant l'invention, une telle lecture de données dans un de ces fichiers élémentaires se poursuit, soit de manière automatique, soit à la demande de l'utilisateur, par une lecture de données complémentaires associées stockées dans le fichier élémentaire complémentaire associé.

Cette lecture de données complémentaires implique de façon similaire, l'envoi, par ce terminal, sur l'interface entre ce module et ce terminal, d'une instruction de sélection de fichier élémentaire complémentaire, notée ici, de façon similaire, "SELECT CEF" (pour: "Select Complementary Elementary File"), puis d'une instruction de lecture à l'intérieur de ce fichier élémentaire complémentaire, notée ici, de façon similaire, "READ", puis l'envoi, par ce module, sur cette interface, des données complémentaires, notées "COMPLEMENTARY DATA", correspondant au résultat de la lecture.

A titre d'exemple de lecture et d'exploitation de telles données complémentaires, on citera:
- pour des données complémentaires stockées dans le fichier élémentaire CEF-ADN ("Complementary Elementary File-Abbreviated Dialling Numbers"), associées à des données de base constituées par des données de répertoire stockées dans le fichier élémentaire EF-ADN, et constituées par exemple par des données d'information complémentaire (telles que par exemple des adresses et/ou des commentaires associés aux différents numéros de téléphone ou chaînes de contrôle de services supplémentaires stockés dans ce répertoire), et/ou par des données d'identification permettant une identification aisée d'un numéro de téléphone ou d'une chaîne de contrôle stocké dans ce répertoire (telles que par exemple un symbole graphique associé à ce numéro ou à cette chaîne), l'affichage de ces données complémentaires soit automatiquement, soit à la demande de l'utilisateur, par exemple par appui sur une touche de fonction située en regard d'une icône d'aide correspondante affichée lors de la sélection d'un numéro ou d'une chaîne stocké dans ce répertoire,
- pour des données complémentaires stockées dans le fichier élémentaire CEF-SMS ("Complementary Elementary File-Short Message Service"), associées à des données de base constituées ici par des messages alphanumériques courts stockés dans le fichier élémentaire EF-SMS, et constituées par exemple par des messages alphanumériques courts complémentaires (tels que par exemple diverses fins de messages possibles pouvant être associées à divers débuts de messages stockés dans le fichier EF-SMS, comme par exemple divers lieux ou heures possibles de rendez-vous pour un début de message du type "Rendez-vous à ..."), et/ou par des données permettant une identification aisée de message, notamment par un symbole graphique associé à ce message,un affichage de ces données complémentaires , soit automatiquement, soit à la demande de l'utilisateur, par exemple par appui sur une touche de fonction située en regard d'une icône d'aide correspondante affichée lors de la sélection d'un début de message stocké dans ce fichier élémentaire, en vue d'une sélection, par l'utilisateur, d'une de ces fins de message, de manière à obtenir un message complet à émettre, en limitant ainsi en outre les opérations de frappe de ces messages sur le clavier du terminal,
- pour des données complémentaires stockées dans le fichier élémentaire CEF-SDN ("Complementary Elementary File-Service Dialling Numbers"), associées à des données de base constituées ici par des données de répertoire stockées dans le fichier élémentaire EF-SDN, et constituées par exemple par des données d'information complémentaire sur les services à valeur ajoutée opérateur proposés, et/ou par des données d'identification, telles que par exemple des symboles graphiques, permettant une identification aisée d'un tel service, et/ou par des messages de guidage en cours d'utilisation d'un service de type interactif, l'affichage de ces données complémentaires, soit automatiquement, soit à la demande de l'utilisateur, par exemple par appui sur une touche de fonction située en regard d'une icône d'aide correspondante affichée lors de la sélection d'un nom de service stocké dans le fichier élémentaire EF-SDN.

Un terminal compatible avec un module d'identification d'abonné ainsi décrit comporte alors, outre des moyens pour commander la lecture de données de base et pour exploiter des données de base ainsi lues, des moyens pour commander la lecture de données complémentaires associées et pour exploiter ces données complémentaires, par exemple suivant les exemples ainsi décrits.

De tels moyens consistent en pratique, suivant des techniques connues et par conséquent non redécrites ici, en des séquences d'instructions appropriées, prévues dans les moyens de traitement de données (notamment microprocesseur) de ce terminal.

L'écriture desdites données complémentaires pourra être effectuée suivant les principes déjà utilisés pour les données de base.

On notera simplement que dans le cas de fichiers élémentaires (tels que les fichiers EF-SDN et CEF-SDN) contenant des données relatives à des services à valeur ajoutée opérateur, qui ne sont pas accessibles en écriture par les utilisateurs mais seulement par l'opérateur de réseau considéré, il peut être avantageux de stocker de telles données dans le module d'identification d'abonné, plutôt que dans le terminal lui-même, afin d'en faciliter la mise à jour par cet opérateur.

On notera en outre que les divers noms de fichiers élémentaires, tels que EF-ADN, EF-SMS ou EF-SDN, mentionnés dans ce qui précède n'ont été donnés qu'à titre d'exemple et que l'invention s'étend bien entendu à toutes données dites ici de base, stockées dans des zones de mémoire du module d'identification d'abonné prédéfinies afin d'assurer une compatibilité de ce module avec l'ensemble des terminaux susceptibles de le recevoir, que ces données de base aient déjà fait l'objet de normalisation, ou qu'elles n'en fassent l'objet qu'ultérieurement.

On notera par ailleurs que bien que la description qui précède corresponde plus particulièrement, à titre d'exemple, au cas où lesdites données complémentaires sont stockées dans le module d'identification d'abonné, il serait aussi possible de stocker de telles données dans le terminal lui-même. Un tel terminal comporterait alors, outre des moyens de lecture de données de base stockées dans le module d'identification d'abonné, et d'exploitation de données de base ainsi lues, des moyens de stockage de données complémentaires associées, liées à des facilités complémentaires, et des moyens permettant, en cas de lecture, dans ledit module, de données de base, de commander une lecture subséquente, dans ce terminal, de données complémentaires associées, et d'exploiter des données complémentaires ainsi lues.

## Revendications

1. Module d'identification d'abonné (1) pour terminal mobile de télécommunications (2), ce module comportant des moyens (7) de stockage de données dites de base liées à des facilités offertes à l'utilisateur pour l'accès à des services de télécommunications, dans une zone de mémoire (23, 24, 25) prédéfinie afin d'assurer une compatibilité de ce module avec les différents types de terminaux mobiles aptes à recevoir un tel module, et ce module étant caractérisé en ce qu'il comporte en outre des moyens de stockage de données complémentaires associées, liées à des facilités complémentaires, dans une autre zone de mémoire (26, 27, 28), prédéfinie afin de n'assurer une compatibilité de ce module qu'avec certains terminaux seulement.

2. Terminal mobile de télécommunications (2) destiné à être muni d'un module suivant la revendication 1, ce terminal comportant des moyens (9, 11, 16) de lecture de données de base stockées dans un tel module, et des moyens d'exploitation de données de base ainsi lues, et ce terminal étant caractérisé en ce qu'il comporte en outre des moyens (9, 11, 16) permettant, en cas de lecture de données de base, de commander une lecture subséquente de données complémentaires associées, et d'exploiter des données complémentaires ainsi lues.

3. Terminal mobile de télécommunications destiné à coopérer avec un module d'identification d'abonné comportant lui-même des moyens de stockage de données dites de base liées à des facilités offertes à l'utilisateur pour l'accès à des services de télécommunications, ce terminal comportant des moyens de lecture de telles données de base, stockées dans un tel module, et d'exploitation de données de base ainsi lues, et ce terminal étant caractérisé en ce qu'il comporte en outre des moyens de stockage de données complémentaires associées, liées à des facilités complémentaires, et des moyens permettant, en cas de lecture, dans ledit module, de données de base, de commander une lecture subséquente, dans ce terminal, de données complémentaires associées, et d'exploiter des données complémentaires ainsi lues.

4. Module selon la revendication 1, caractérisé en ce que lesdites données de base étant des données de répertoire, liées à l'accès à des services dits de base ou à des services dits supplémentaires, lesdites données complémentaires sont des données dites d'information complémentaire sur les différents numéros de téléphone ou chaînes de contrôle de services supplémentaires stockés dans ce répertoire.

5. Module selon la revendication 1, caractérisé en ce que lesdites données de base étant des données de répertoire, liées à l'accès à des services dits de base ou à des services dits supplémentaires, lesdites données complémentaires sont des données d'identification, permettant une identification aisée des différents numéros de téléphone ou chaînes de contrôle de services supplémentaires stockés dans ce répertoire, notamment par des symboles graphiques associés à ces numéros de téléphone ou à ces chaînes de contrôle de services supplémentaires.

6. Module selon la revendication 1, caractérisé en ce que lesdites données de base étant liées à l'accès à des services de transmission de messages alphanumériques courts, lesdites données complémentaires sont des messages alphanumériques courts complémentaires tels que notamment diverses fins de message possibles pouvant être associées à des données de base constitué par divers débuts de messages alphanumériques courts.

7. Module selon la revendication 1, caractérisé en ce que lesdites données de base étant liées à l'accès à des services de transmission de messages alphanumériques courts, lesdites données complémentaires sont des données dites d'identification permettant une identification aisée de message, notamment par un symbole graphique associé.

8. Module selon la revendication 1, caractérisé en ce que lesdites données de base étant liées à l'accès à des services dits à valeur ajoutée opérateur, lesdites données complémentaires comportent des données d'information complémentaire sur ces services à valeur ajoutée opérateur.

9. Module selon la revendication 1, caractérisé en ce que lesdites données de base étant liées à l'accès à des services dits à valeur ajoutée opérateur, lesdites données complémentaires comportent des données permettant une identification aisée d'un tel service, notamment par un symbole graphique associé à ce service.

10. Module selon la revendication 1, caractérisé en ce que lesdites données de base étant liées à l'accès à des services dits à valeur ajoutée opérateur, lesdites données complémentaires comportent des messages de guidage de l'utilisateur, en cours d'utilisation d'un tel service, de type interactif.

11. Terminal selon la revendication 3, caractérisé en ce que lesdites données de base étant des données de répertoire, liées à l'accès à des services dits de base ou à des services dits supplémentaires, lesdites données complémentaires sont des données dites d'information complémentaire sur les différents numéros de téléphone ou chaînes de contrôle de services supplémentaires stockés dans ce répertoire.

12. Terminal selon la revendication 3, caractérisé en ce que lesdites données de base étant des données de répertoire, liées à l'accès à des services dits de base ou à des services dits supplémentaires, lesdites données complémentaires sont des données d'identification, permettant une identification aisée des différents numéros de téléphone ou chaînes de contrôle de services supplémentaires stockés dans ce répertoire, notamment par des symboles graphiques associés à ces numéros de téléphone ou à ces chaînes de contrôle de services supplémentaires.

13. Terminal selon la revendication 3, caractérisé en ce que lesdites données de base étant liées à l'accès à des services de transmission de messages alphanumériques courts, lesdites données complémentaires sont des messages alphanumériques courts complémentaires tels que notamment diverses fins de message possibles pouvant être associées à des données de base constitué par un divers débuts de messages alphanumériques courts.

14. Terminal selon la revendication 3, caractérisé en ce que lesdites données de base étant liées à l'accès à des services dits à valeur ajoutée opérateur, lesdites données complémentaires comportent des données d'information complémentaire sur ces services à valeur ajoutée opérateur.

15. Terminal selon la revendication 3, caractérisé en ce que lesdites données de base étant liées à l'accès à des services dits à valeur ajoutée opérateur, lesdites données complémentaires comportent des données permettant une identification aisée d'un tel service, notamment par un symbole graphique associé à ce service.

16. Terminal selon la revendication 3, caractérisé en ce que lesdites données de base étant liées à l'accès à des services dits à valeur ajoutée opérateur, lesdites données complémentaires comportent des messages de guidage de l'utilisateur, en cours d'utilisation d'un tel service, de type interactif.
